(19)

Europäisches
Patentamt
European
Patent Office
Office européen
des brevets

(11) **EP 2 712 047 A1**

(12) # EUROPEAN PATENT APPLICATION
published in accordance with Art. 153(4) EPC

(43) Date of publication:
**26.03.2014 Bulletin 2014/13**

(21) Application number: **12785888.4**

(22) Date of filing: **23.03.2012**

(51) Int Cl.:
**H02J 7/04** *(2006.01)*

(86) International application number:
**PCT/JP2012/057429**

(87) International publication number:
**WO 2012/157337 (22.11.2012 Gazette 2012/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.05.2011 JP 2011109375**

(71) Applicant: **NEC CASIO Mobile Communications, Ltd.**
**Kawasaki-shi, Kanagawa 211-8666 (JP)**

(72) Inventor: **NISHIWAKI, Kazuyuki**
**Kawasaki-shi**
**Kanagawa 211-8666 (JP)**

(74) Representative: **Vossius & Partner**
**Siebertstrasse 4**
**81675 München (DE)**

(54) **PROCESSING APPARATUS, CHARGING SYSTEM, CHARGING METHOD, AND PROGRAM**

(57)     This charging system includes: charging circuit (12) that charges a rechargeable battery (11); an antenna (13) that receives radio waves; wireless transmitting/receiving circuit (14) that detects the reception state of radio waves by the antenna (13); and baseband control circuit (15) that controls the charging of rechargeable battery (11) by charging circuit (12) based on the reception state detected by means of wireless transmitting/receiving circuit (14) in a state in which the rechargeable battery (11) is not being charged and a reception state detected by the wireless transmitting/receiving circuit (14) during charging of the rechargeable battery (11).

Fig.1

EP 2 712 047 A1

**Description**

Technical Field

The present invention relates to a processing apparatus that is equipped with a rechargeable battery and that performs the operations of receiving radio waves.

Background Art

At present, portable telephone terminals are generally capable of performing communication even when being recharged. For example, in recent years, contactless charging systems have been put into operation that are capable of charging portable telephone terminals of 5W or more by contactless charging modes according to international bodies such as the WPC (Wireless Power Consortium).

However, in a processing apparatus such as a portable telephone terminal that performs communication even during charging like this type, the problem arises that reception sensitivity deteriorates due to noise that is generated from the charger during charging, whereby the quality of reception and calls is reduced. The effect of this problem is particularly severe in environments in which electric field strength is weak such as in an underground room or areas that are remote from the base station antenna, and the problem may even arise in portable telephone terminals that give priority to communication service in which call connection becomes impossible during charging.

The degree of the effect of deterioration of the reception sensitivity when in reception standby or communication while charging the portable telephone terminal described hereinabove differs greatly according to the frequency band of the communication system or the electric field strength environment. As long as the degree of influence does not exceed a certain set level, the deterioration will not constitute a fatal hindrance to call connection operations or communication operations. In other words, in most cases, despite the occurrence of deterioration in reception sensitivity, this problem does not constitute a fatal impediment to call connection operations or communication operations. However, when the problem becomes a fatal impediment to call connection operations or communication operations, the deterioration of reception sensitivity caused by noise generated by a charger must be avoided in portable telephone terminals that prioritize communication service.

A technique has been considered in which the charging operation is halted in a portable wireless apparatus while it is engaged in reception operations (for example, refer to Patent Document 1). The use of this technique can avoid the drop in quality during reception operations that is caused by the charging operation.

Literature of the Prior Art

Patent Documents

Patent Document 1: Japanese Patent Application Publication No. 2008-131812

Summary of the Invention

Problem to be Solved by the Invention

Nevertheless, lithium-ion batteries that are frequently used in portable telephone terminals suffer from the problem that the life of the battery is shortened due to the charge/discharge cycle deterioration of the battery when charging is repeatedly carried out over short periods such as when a portable wireless apparatus halts a charging operation during reception operations as described hereinabove.

The present invention was realized in view of the problems inherent to the above-described art and has as an object providing a processing apparatus, a charging system, a charging method, and a program that, in a processing apparatus that is equipped with a rechargeable battery and that performs operations of receiving radio waves, can avoid deterioration in the quality of reception and calls caused by charging while reducing adverse effects such as the shortening of the life of the rechargeable battery.

Means for Solving the Problem

The present invention for achieving the above-described objects includes:

charging means that performs charging of a rechargeable battery;
radio-wave reception means that receives radio waves;

reception state detection means that detects the reception state of radio waves in the radio-wave reception means; and

control means that controls charging of the rechargeable battery by the charging means based on a reception state that is detected by the reception state detection means in a state where charging of the rechargeable battery is not being carried out and a reception state that is detected by the reception state detection means during charging of the rechargeable battery.

In addition, the present invention relates to a charging system that includes a processing apparatus and a charger, wherein:

the processing apparatus includes:

charging means that uses electric power supplied from the charger to perform charging of a rechargeable battery;
radio-wave reception means that receives radio waves;
reception state detection means that detects the reception state of radio waves in the radio-wave reception means; and
first control means that supplies control signals to the charger for controlling charging of the rechargeable battery based on a reception state that is detected by the reception state detection means in a state where charging of the rechargeable battery is not being carried out and a reception state that is detected by the reception state detection means during charging of the rechargeable battery; and

the charger incudes:

power supply means that supplies electric power to the processing apparatus; and
second control means that controls the supply of electric power to the processing apparatus in the power supply means according to the control signal supplied from the first control means.

In addition, the present invention relates to a charging method in a processing apparatus that is equipped with a rechargeable battery and includes:

a first reception state detection process of the processing apparatus that detects a reception state of radio waves in a state where charging of the rechargeable battery is not being carried out;
a second reception state detection process of the processing apparatus that detects a reception state of radio waves during charging of the rechargeable battery; and
a charging control process of the processing apparatus that controls charging of the rechargeable battery based on the reception states that were detected in each of the first reception state detection process and the second reception state detection process.

In addition, the present invention relates to a program that causes a processing apparatus that is equipped with a rechargeable battery to execute:

a first reception state detection procedure of detecting a reception state of radio waves in a state in where charging of the rechargeable battery is not being carried out;
a second reception state detection procedure of detecting a reception state of radio waves during charging of the rechargeable battery; and
a charging control procedure of controlling charging of the rechargeable battery based on the reception states that were detected in each of the first reception state detection procedure and the second reception state detection procedure.

Effect of the Invention

Due to the above-described configuration, the present invention is able to avoid drops in the quality of reception and calls that arise from charging of a rechargeable battery, and at such times, is able to reduce adverse effects such as shortening of the life of the rechargeable battery.

Brief Description of the Drawings

FIG. 1 shows an outline of the charging system that uses the processing apparatus of the present invention.

FIG. 2 shows an exemplary embodiment of the charging system shown in FIG. 1.

FIG. 3 is a flow chart for describing an exemplary embodiment of the charging method of a portable telephone terminal in the charging system shown in FIG. 2.

FIG. 4 is a flow chart for describing another exemplary embodiment of the charging method of a portable telephone terminal in the charging system shown in FIG. 2.


Best Mode for Carrying Out the Invention

Exemplary embodiments of the present invention are next described with reference to the accompanying figures.

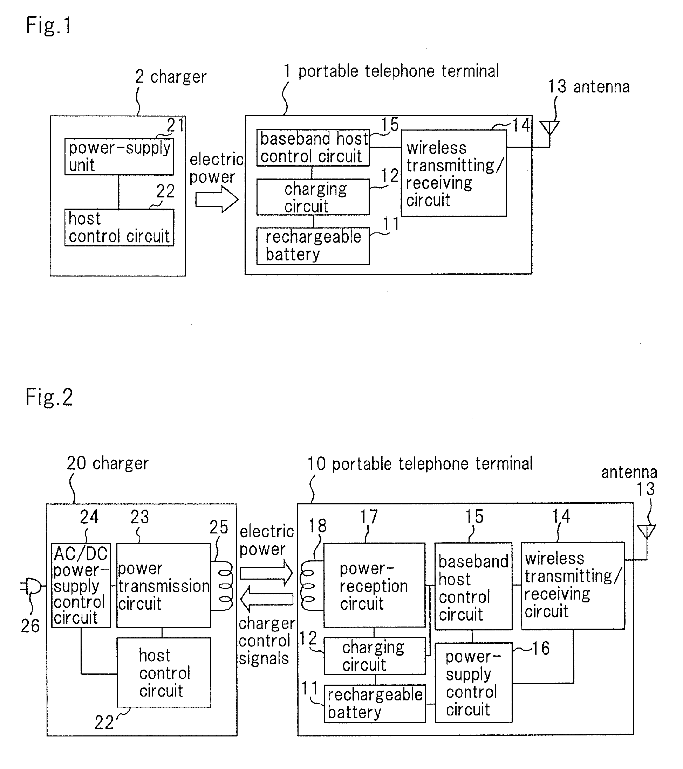

FIG. 1 shows an outline of the charging system that uses the processing apparatus of the present invention.

As shown in FIG. 1, the charging system of the present invention is made up of portable telephone terminal 1 that is the processing apparatus and charger 2. Portable telephone terminal 1 includes: rechargeable battery 11, charging circuit 12 that is the charging means, antenna 13 that is the radio wave reception means, wireless transmitting/receiving circuit 14 that is the reception state detection means, and baseband host control circuit 15 that is the first control means. In addition, charger 2 includes power-supply unit 21 that is the power supply means and host control circuit 22 that is the second control means.

In a charging system that is configured as described above, charging of rechargeable battery 11 of portable telephone terminal 1 is charged by the electric power supplied from charger 2.

In portable telephone terminal 1, radio waves are received by antenna 13. The reception state of the radio waves at antenna 13 is detected in wireless transmitting/receiving circuit 14. Charging circuit 12 uses electric power that is supplied from charger 2 to carry out charging of rechargeable battery 11, but the control of this charging is carried out by baseband host control circuit 15. Baseband host control circuit 15 controls the charging of rechargeable battery 11 by charging circuit 12 based on the reception state that is detected in wireless transmitting/receiving circuit 14 in a state where charging of rechargeable battery 11 is not being carried out and the reception state that is detected in wireless transmitting/receiving circuit 14 during charging of rechargeable battery 11.

In charger 2, electric power for carrying out charging of rechargeable battery 11 is supplied to portable telephone terminal 1 from power-supply unit 21, but the control of this supply is carried out by host control circuit 22.

The charging system that is configured as described above is next described by way of a specific example.

FIG. 2 shows an exemplary embodiment of the charging system shown in FIG. 1.

As shown in FIG. 2, the present exemplary embodiment is made up of: portable telephone terminal 10 that receives radio waves and carries out operations, and charger 20 that carries out charging of portable telephone terminal 10.

Portable telephone terminal 10 is made up of: rechargeable battery 11, charging circuit 12, antenna 13 that serves as the radio-wave reception means, wireless transmitting/receiving circuit 14 that serves as the reception state detection means, baseband host control circuit 15 that serves as the first control means, power-supply control circuit 16, power-reception circuit 17, and power-reception/signal transmission coil 18.

Charging circuit 12 carries out charging of rechargeable battery 11 using electric power that is supplied from charger 20.

Antenna 13 transmits and receives radio waves.

Wireless transmitting/receiving circuit 14 transmits and receives signals used in the operations of portable telephone terminal 10 by radio waves via antenna 13, and further, detects the reception sensitivity that is the reception state of radio waves in antenna 13, and supplies the reception sensitivity value to baseband host control circuit 15.

Baseband host control circuit 15 controls the charging of rechargeable battery 11 by charging circuit 12 based on a first reception sensitivity that is detected by wireless transmitting/receiving circuit 14 in a state where charging of rechargeable battery 11 is not being carried out and a second reception sensitivity that is detected by wireless transmitting/receiving circuit 14 during charging of rechargeable battery 11. More specifically, baseband host control circuit 15 supplies a charger control signal for controlling charging of rechargeable battery 11 to charger 20 by way of power-reception circuit 17 and power-reception/signal transmission coil 18 when the difference between the first reception sensitivity and the second reception sensitivity that are detected and supplied by wireless transmitting/receiving circuit 14 is equal to or greater than a first value that is determined in advance, and moreover, when the second reception sensitivity that is detected and supplied by wireless transmitting/receiving circuit 14 is no greater than a second value that is determined in advance. Baseband host control circuit 15 additionally supplies a charger control signal to charger 20 by way of power-reception circuit 17 and power-reception/signal transmission coil 18 such that charging of rechargeable battery 11 by the charging circuit is started when a predetermined time interval has elapsed following the halt of charging of rechargeable battery 11 by charging circuit 12, when the frequency band of the radio waves received by antenna 13 have changed, or when the channel used by portable telephone terminal 10 has changed. In addition, when the amount of charging of rechargeable battery 11 is greater than an amount that has been determined in advance, baseband host control circuit 15, by not supplying a charger control signal to charger 20, implements control such that charging of rechargeable battery 11 by charging circuit 12 does not begin.

Power-supply control circuit 16 supplies electric power from charged rechargeable battery 11 as a power supply to wireless transmitting/receiving circuit 14 and baseband host control circuit 15.

Power-reception circuit 17 receives the electric power that is supplied from charger 20 by way of power-reception/signal transmission coil 18 and gives this electric power to charging circuit 12.

Charger 20 is made up from power transmission circuit 23 that serves as the power supply means, host control circuit 22 that serves as the second control means, AC/DC power-supply control circuit 24, power transmission/signal reception coil 25, and plug 26.

AC/DC power-supply control circuit 24 converts alternating-current power that is supplied from plug 26 that is plugged into an outlet to direct-current power and supplies the direct-current power to host control circuit 22 and power transmission circuit 23.

Power transmission circuit 23 supplies the power realized by the direct-current power supplied from AC/DC power-supply control circuit 24 to portable telephone terminal 10 by way of power transmission/signal reception coil 25.

Host control circuit 22 controls the supply of electric power to portable telephone terminal 10 from power transmission circuit 23 according to charger control signals that are supplied from baseband host control circuit 15 of portable telephone terminal 10.

The charging method of portable telephone terminal 10 in the charging system that is configured as described hereinabove is next described hereinbelow.

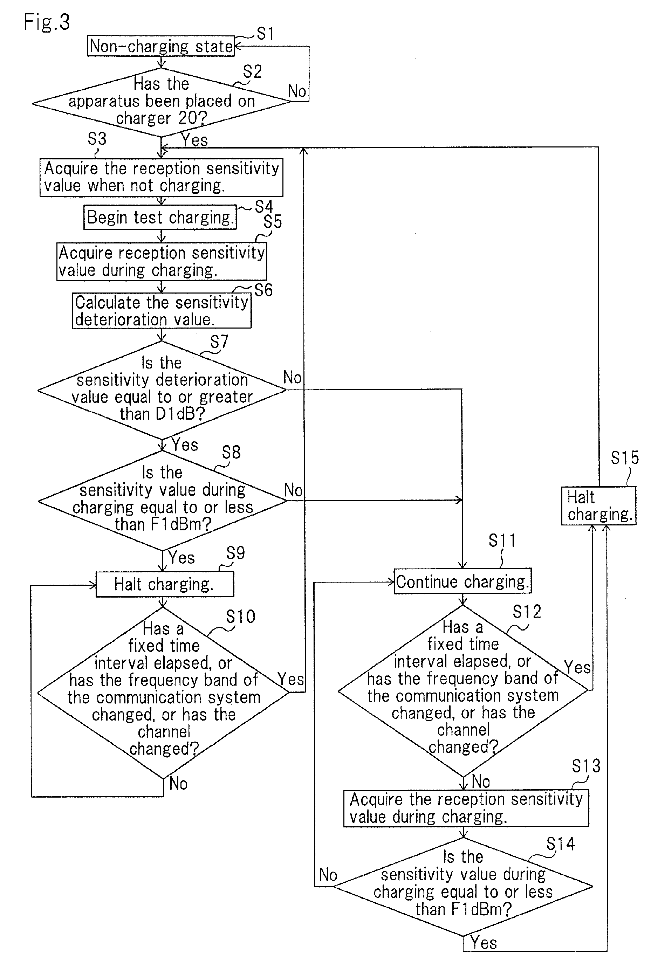

FIG. 3 is a flow chart for describing an exemplary embodiment of the charging method of portable telephone terminal 10 in the charging system shown in FIG. 2.

After being in a non-charging state in which portable terminal 10 was not placed on charger 20 (Step 1), once it has been determined that portable telephone terminal 10 has been placed on charger 20 (Step 2), baseband host control circuit 15 first supplies a charger control signal for temporarily halting power transmission of electric power from charger 20. The determination that portable telephone terminal 10 has been placed on charger 20 can conceivably be realized by, for example, using the detection of the passage of electricity between portable telephone terminal 10 and charger 20. In a configuration in which the supply of electric power from charger 20 to portable telephone terminal 10 is realized by contactless charging by way of power-reception/signal transmission coil 18 and power transmission/signal reception coil 25, as in the present exemplary embodiment, it can be considered that portable telephone terminal 10 is determined to have been placed on charger 20 when the electric power that is supplied from charger 20 is received in portable telephone terminal 10 by way of power-reception/signal transmission coil 18. Alternatively, it may also be determined that portable telephone terminal 10 has been placed on charger 20 by a physical means.

When the charger control signal is supplied from baseband host control circuit 15, power-reception circuit 17 transmits the charger control signal that was supplied from baseband host control circuit 15 to charger 20 by way of power-reception/signal transmission coil 18.

The charger control signal that is transmitted from portable telephone terminal 10 to charger 20 is received in host control circuit 22 by way of power transmission/signal reception coil 25 of charger 20.

Upon receiving the charger control signal, host control circuit 22 halts the supply of electric power from power transmission circuit 23 to portable telephone terminal 10 in accordance with the charger control signal that was received, whereby, despite being placed on charger 20, portable telephone terminal 10 enters a non-charging state in which charging to rechargeable battery 11 is not carried out.

In this non-charging state, portable telephone terminal 10, as the first reception state detection process, detects the reception sensitivity of radio waves that are received by antenna 13 in wireless transmitting/receiving circuit 14. Wireless transmitting/receiving circuit 14 then sends the reception sensitivity data of the radio waves that were detected to baseband host control circuit 15 and these data are stored in baseband host control circuit 15 as the sensitivity value during non-charging (Step 3).

Portable telephone terminal 10 then supplies from baseband host control circuit 15 a charger control signal that permits power transmission of electric power from charger 20 to carry out charging of rechargeable battery 11.

When the charger control signal is supplied from baseband host control circuit 15, power-reception circuit 17 transmits the charger control signal that was supplied from baseband host control circuit 15 to charger 20 by way of power-reception/signal transmission coil 18.

The charger control signal that is transmitted from portable telephone terminal 10 to charger 20 is received in host control circuit 22 by way of power transmission/signal reception coil 25 of charger 20.

Upon receiving the charger control signal, host control circuit 22 begins the supply of electric power from power transmission circuit 23 to portable telephone terminal 10 in accordance with the charger control signal that was received, and this electric power is received in power-reception circuit 17 by way of power transmission/signal reception coil 25 and power-reception/signal transmission coil 18. Charging circuit 12 then uses the electric power that is received in power-reception circuit 17 to begin test charging of rechargeable battery 11 (Step 4), whereby a charging state is entered in which charging of rechargeable battery 11 is being carried out.

In this charging state, portable telephone terminal 10, as the second reception state detection process, detects the reception sensitivity of radio waves that are received by antenna 13 in wireless transmitting/receiving circuit 14. Wireless transmitting/receiving circuit 14 then sends the reception sensitivity data of radio waves that were detected to baseband host control circuit 15, and these data are stored in baseband host control circuit 15 as the sensitivity value during charging (Step 5).

Baseband host control circuit 15 uses this sensitivity value during charging and the sensitivity value during non-charging that was stored in Step 3 to calculate sensitivity deterioration value D based on the following formula (Step 6):

$$\text{Sensitivity deterioration value D} =$$

$$\text{(sensitivity value during non-charging)} - \text{(sensitivity value during charging)}$$

Baseband host control circuit 15 then judges whether the sensitivity deterioration value D that was calculated is equal to or greater than D1dB that is the first value that was determined in advance (Step 7).

When sensitivity deterioration value D is equal to or greater than D1dB, baseband host control circuit 15 judges that there is influence of sensitivity deterioration due to charging and then judges whether the sensitivity value during charging that was stored in Step 5 is equal to or less than F1dBm, which is the second value that was determined in advance (Step 8).

If the sensitivity value during charging is no greater than F1dBm, baseband host control circuit 15 judges that a fault has occurred in which reception sensitivity has deteriorated due to noise generated from charger 20 and reception and calls are impeded, and therefore supplies a charger control signal for halting the transmission of electric power from charger 20.

When the charger control signal is supplied from baseband host control circuit 15, power-reception circuit 17 transmits the charger control signal that is supplied from baseband host control circuit 15 to charger 20 by way of power-reception/signal transmission coil 18.

The charger control signal that is transmitted to charger 20 from portable telephone terminal 10 is received in host control circuit 22 by way of power transmission/signal reception coil 25 of charger 20.

Upon receiving the charger control signal, host control circuit 22 halts the supply of electric power from power transmission circuit 23 to portable telephone terminal 10 in accordance with the charger control signal that was received, whereby, despite being placed on charger 20, portable telephone terminal 10 enters a state in which charging of rechargeable battery 11 is halted (Step 9) and noise generated from charger 20 is thus reduced.

Portable telephone terminal 10 then maintains this state of halting charging until a fixed time interval has elapsed, until a change occurs in the communication system frequency band and the frequency band of radio waves received by antenna 13 changes, or until the channel being used changes in accordance with the state of use of portable telephone terminal 10 (Step 10). The fixed time interval described above is assumed to be a time interval of a length that has no effect on the charge/discharge cycle deterioration of rechargeable battery 11 even when this fixed time interval is repeated cyclically.

When, after having entered the state of halting charging of rechargeable battery 11, a fixed time interval has elapsed, a change occurs in the communication system frequency band and the frequency band of radio waves received by antenna 13 changes, or the channel being used changes in accordance with the state of use of portable telephone terminal 10, the process returns to Step 3 to reappraise the effect of the deterioration in reception sensitivity caused by noise generated from charger 20.

When the sensitivity deterioration value D does not reach D1dB in the judgment of Step 7, baseband host control circuit 15 judges that there is no effect of deterioration of reception sensitivity due to noise generated from charger 20, does not supply a charger control signal for halting the transmission of electric power from charger 20, whereby charging circuit 12 continues the charging of rechargeable battery 11 (Step 11).

If the sensitivity value during charging surpasses F1dBm in the judgment of Step 8, baseband host control circuit 15 judges that, although there is influence of deterioration of reception sensitivity due to noise generated from charger 20, because the radio-wave environment is an intermediate-to-strong electric field, a fault has not occurred that impedes the reception and calls of portable telephone terminal 10 and therefore does not supply a charger control signal for halting the transmission of electric power from charger 20, whereby charging circuit 12 continues the charging of rechargeable battery 11 in Step 11.

Subsequently in portable telephone terminal 10, until the fixed time interval has elapsed, until a change occurs in the communication system frequency band and the frequency band of radio waves received by antenna 13 changes, or until the channel in use changes in accordance with the state of use of portable telephone terminal 10 (Step 12), baseband host control circuit 15 will acquire the reception sensitivity value during charging that is detected by wireless transmitting/receiving circuit 14 (Step 13) and judges whether this reception sensitivity value during charging is equal to or less than F1dBm (Step 14), similar to the processes in Steps 5 and 8.

If the sensitivity value during charging exceeds F1dBm, the electric power from charger 20 continues to be supplied and the charging of rechargeable battery 11 is continued.

In addition, when the fixed time interval has elapsed, when the communication system frequency band changes and the frequency band of the radio waves received by antenna 13 changes, or when the channel in use changes in accordance with the state of use of portable telephone terminal 10 in a state where charging of rechargeable battery 11 is continued in Step 11, or when the sensitivity value during charging is equal to or less than F1dBm, baseband host control circuit 15 supplies a charger control signal to halt the transmission of electric power from charger 20, similar to the process in Step 9, whereby the supply of electric power from power transmission circuit 23 to portable telephone terminal 10 is halted and a state is entered in which charging of rechargeable battery 11 is halted (Step 15). The process then returns to Step 3 to reappraise the effect of the deterioration in reception sensitivity caused by noise generated from charger 20.

Because portable telephone terminal 10 in the present exemplary embodiment carries out charging by means of charger 20 as described hereinabove, portable telephone terminal 10 can appropriately judge a state in which call connection operations and communication operations are fatally impeded by the noise of the charging operation, and in only such cases, can solve the fatal problem for call connection operations and communication operations due to the deterioration of reception sensitivity. In addition, the shortening of the life of rechargeable battery 11 caused by the charge-discharge cycle deterioration of rechargeable battery 11 can also be avoided.

Another Exemplary Embodiment

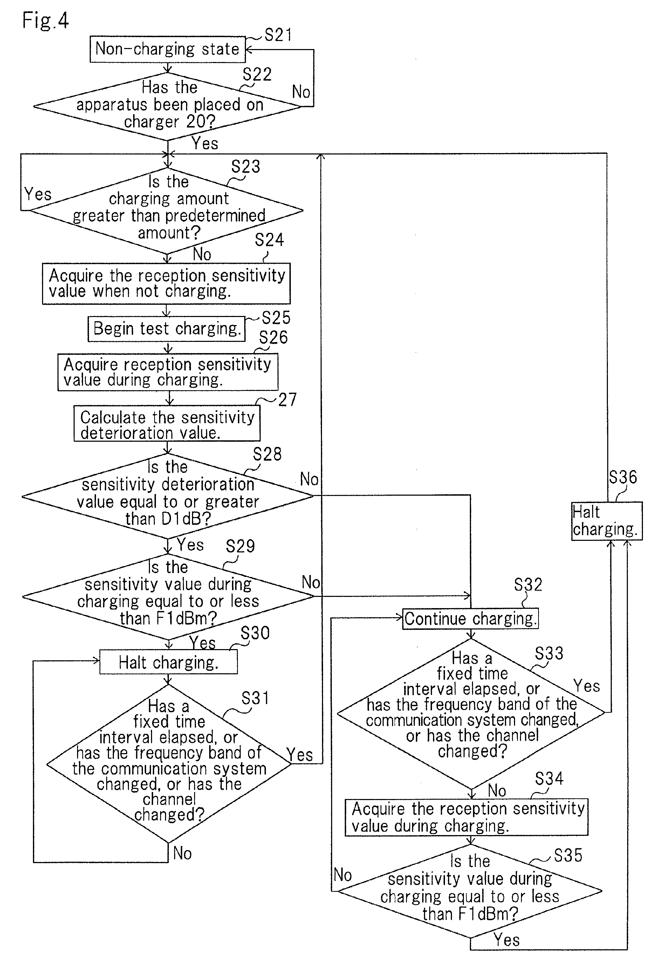

FIG. 4 is a flow chart for describing another exemplary embodiment of the charging method of portable telephone terminal 10 in the charging system shown in FIG. 2.

The charging method in this embodiment differs from the method shown in the above-described embodiment in that, before carrying out the above-described charging control, the amount of charging of rechargeable battery 11 is checked, and when this amount of charging is greater than an amount that has been determined in advance, charging control is not carried out.

In the present exemplary embodiment, after portable telephone terminal 10 has been placed on charger 20 in the non-charging state (Steps 21 and 22), baseband host control circuit 15 checks the charging amount of rechargeable battery 11 (Step 23) and carries out charging control similar to Steps 3-15 shown in FIG. 3 only when this charging amount is equal to or less than an amount that has been determined in advance (Steps 24-36).

By thus carrying out charging control only when the charging amount of rechargeable battery 11 is equal to or less than a predetermined amount, the number of instances of switching between the charging state and the non-charging state can be reduced and the shortening of the life of rechargeable battery 11 can be further avoided.

In the above-described exemplary embodiment, the charging of rechargeable battery 11 was described by taking as an example charging by means of contactless charging in which the electric power that is supplied from charger 20 is received in portable telephone terminal 10 by way of power transmission/signal reception coil 25 and power-reception/signal transmission coil 18, but the present invention can be applied in a system that carries out charging of rechargeable battery 11 by contact charging as long as the charging state realized by charger 20 can be controlled from portable telephone terminal 10.

The charging system such as has been described above can be used as a countermeasure for sensitivity deterioration of a portable telephone terminal of a contactless charging system that is composed of a contactless charging stand (transmitter) that conforms to WPC and a portable terminal (receiver) that is capable of contactless charging.

In addition, as long as the processing apparatus carries out the operation of receiving radio waves, the processing apparatus of the present invention is not limited to the above-described portable telephone terminal and may be, for example, a portable music player, a portable game device, a tablet PC, or a notebook PC.

In the present invention, moreover, processing in portable telephone terminal 10, apart from being realized based on the above-described dedicated hardware, may also be realized by recording a program for realizing the relevant functions on a recording medium that can be read by portable telephone terminal 10 and then causing portable telephone terminal 10 to read and execute the program that is recorded on this recording medium. The recording medium that can be read by portable telephone terminal 10 refers not only to removable recording media such as an IC card or memory card, or to a floppy disk (registered trademark), magneto-optical disk, DVD, or CD, but also to a medium such as an HDD that is incorporated in portable telephone terminal 10. The program that is recorded on this recording medium is, for example, read to a control block, and processes similar to those described hereinabove are then carried out based on the control of the control block.

Although the invention of the present application has been described with reference to exemplary embodiments, the invention of the present application is not limited to the above-described exemplary embodiments. The configuration and details of the invention of the present application are open to various modifications within the scope of the invention of the present application that will be clear to one of ordinary skill in the art.

This application claims the benefits of priority based on Japanese Patent Application No. 2011-109375 for which application was submitted on May 16, 2011 and incorporates by citation all of the disclosures of that application.

**Claims**

1.   A processing apparatus comprising:

charging means that performs charging of a rechargeable battery;
radio-wave reception means that receives radio waves;
reception state detection means that detects the reception state of radio waves in said radio-wave reception means; and
control means that controls charging of said rechargeable battery by said charging means based on a reception state that is detected by said reception state detection means in a state where charging of said rechargeable battery is not being carried out and a reception state that is detected by said reception state detection means during charging of said rechargeable battery.

2.   The processing apparatus according to claim 1, wherein:

said reception state detection means detects a first reception sensitivity that is the reception sensitivity of radio waves in said radio-wave reception means in a state where charging of said rechargeable battery is not being carried out and a second reception sensitivity that is the reception sensitivity of radio waves in said radio-wave reception means during charging of said rechargeable battery; and
said control means implements control such that charging of said rechargeable battery by said charging means is halted when the difference between said first reception sensitivity and said second reception sensitivity is equal to or greater than a predetermined first value, and moreover, when said second reception sensitivity is equal to or less than a predetermined second value.

3.   The processing apparatus according to claim 2, wherein said control means implements control such that charging of said rechargeable battery by said charging means begins: when, after charging of said rechargeable battery by said charging means has been halted, a predetermined time interval has elapsed; when the frequency band of radio waves received by said radio-wave reception means changes; or when the channel being used in said processing apparatus changes.

4.   The processing apparatus according to any one of claims 1 to 3, wherein said control means implements control such that charging of said rechargeable battery by said charging means does not begin when the charging amount of said rechargeable battery is greater than a predetermined amount.

5.   A charging system that has a processing apparatus and a charger, wherein:

said processing apparatus comprises:

charging means that uses electric power supplied from said charger to perform charging of a rechargeable battery;
radio-wave reception means that receives radio waves;
reception state detection means that detects the reception state of radio waves in said radio-wave reception means; and
first control means that supplies control signals to said charger for controlling charging of said rechargeable battery based on a reception state that is detected by said reception state detection means in a state where charging of said rechargeable battery is not being carried out and a reception state that is detected by said reception state detection means during charging of said rechargeable battery; and

said charger comprises:

power supply means that supplies electric power to said processing apparatus; and

second control means that controls the supply of electric power to said processing apparatus in said power supply means according to control signals supplied from said first control means.

6. A charging method in a processing apparatus that is equipped with a rechargeable battery, comprising:

a first reception state detection process of said processing apparatus that detects a reception state of radio waves in a state where charging of said rechargeable battery is not being carried out;

a second reception state detection process of said processing apparatus that detects a reception state of radio waves during charging of said rechargeable battery; and

a charging control process of said processing apparatus that controls charging of said rechargeable battery based on the reception states that were detected in each of said first reception state detection process and said second reception state detection process.

7. A program that causes a processing apparatus that is equipped with a rechargeable battery to execute:

a first reception state detection procedure of detecting a reception state of radio waves in a state where charging of said rechargeable battery is not being carried out;

a second reception state detection procedure of detecting a reception state of radio waves during charging of said rechargeable battery; and

a charging control procedure of controlling charging of said rechargeable battery based on the reception states that were detected in each of said first reception state detection procedure and said second reception state detection procedure.

Fig.1

Fig.2

Fig.3

S1 — Non-charging state

S2 — Has the apparatus been placed on charger 20? — No

Yes

S3 — Acquire the reception sensitivity value when not charging.

S4 — Begin test charging.

S5 — Acquire reception sensitivity value during charging.

S6 — Calculate the sensitivity deterioration value.

S7 — Is the sensitivity deterioration value equal to or greater than D1dB? — No

Yes

S8 — Is the sensitivity value during charging equal to or less than F1dBm? — No

Yes

S9 — Halt charging.

S10 — Has a fixed time interval elapsed, or has the frequency band of the communication system changed, or has the channel changed? — Yes / No

S11 — Continue charging.

S12 — Has a fixed time interval elapsed, or has the frequency band of the communication system changed, or has the channel changed? — Yes / No

S13 — Acquire the reception sensitivity value during charging.

S14 — Is the sensitivity value during charging equal to or less than F1dBm? — No / Yes

S15 — Halt charging.

Fig.4

## INTERNATIONAL SEARCH REPORT

| International application No. |
|---|
| PCT/JP2012/057429 |

**A. CLASSIFICATION OF SUBJECT MATTER**
*H02J7/04*(2006.01)i

According to International Patent Classification (IPC) or to both national classification and IPC

**B. FIELDS SEARCHED**

Minimum documentation searched (classification system followed by classification symbols)
H02J7/04

Documentation searched other than minimum documentation to the extent that such documents are included in the fields searched
Jitsuyo Shinan Koho      1922-1996   Jitsuyo Shinan Toroku Koho   1996-2012
Kokai Jitsuyo Shinan Koho   1971-2012   Toroku Jitsuyo Shinan Koho   1994-2012

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 7-87678 A (Casio Computer Co., Ltd.), 31 March 1995 (31.03.1995), paragraph [0008] (Family: none) | 1-7 |
| A | JP 2005-45669 A (Sanyo Electric Co., Ltd.), 17 February 2005 (17.02.2005), paragraph [0027] (Family: none) | 1-7 |
| A | JP 2006-340586 A (NEC Access Technica, Ltd.), 14 December 2006 (14.12.2006), paragraph [0031] (Family: none) | 1-7 |

☒ Further documents are listed in the continuation of Box C.    ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 07 June, 2012 (07.06.12) | 19 June, 2012 (19.06.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2012/057429 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2008-131812 A  (Kenwood Corp.), 05 June 2008 (05.06.2008), paragraph [0010] (Family: none) | 1-7 |
| A | JP 2011-78191 A  (NEC CASIO Mobile Communications, Ltd.), 14 April 2011 (14.04.2011), paragraph [0037] (Family: none) | 1-7 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008131812 A
- JP 2011109375 A